# EUROPÄISCHE PATENTSCHRIFT

(11) **EP 1 911 660 B1**
(45) Veröffentlichungstag und Bekanntmachung des Hinweises auf die Patenterteilung: **10.02.2010**
(21) Anmeldenummer: 07020060.5
(22) Anmeldetag: 12.10.2007
(51) Int. Cl.: B62D 5/04, B62D 7/14

(54) **Hinterradlenkungs-Aktuator**
Rear wheel steering actuator
Actionneur de direction pour roues arrière

(30) Priorität: 13.10.2006 DE 102006048614
(43) Veröffentlichungstag der Anmeldung: 16.04.2008
(73) Patentinhaber: Magna Powertrain AG & Co. KG, 8502 Lannach (AT)
(72) Erfinder: Riegler, Ernst, 8042 Graz (AT); Reicher, Horst, 8181 St. Ruprecht an der Raab (AT); Eitzinger, Stefan, 8051 Graz (AT)
(74) Vertreter: Manitz, Finsterwald & Partner GbR

(56) Entgegenhaltungen:
- EP-A- 0 775 624
- WO-A-01/40046
- JP-A- 63 103 763
- US-A- 5 595 089
- US-A1- 2003 150 667

## Beschreibung

Die Erfindung betrifft einen Hinterradlenkungs-Aktuator für die Lenkung der Hinterräder eines Kraftfahrzeuges mittels eines Elektromotors, bestehend aus einem Gehäuse, einem Elektromotor, dessen Stator gehäusefest ist und dessen Rotor mit einer im Gehäuse gelagerten Spindelmutter antriebsverbunden ist, und aus einer mit der Spindelmutter zusammenwirkenden Spindel, welche an entgegengesetzten Seiten aus dem Gehäuse austritt und jeweils mit einer Spurstange gelenkig verbunden wird.

Die EP 0 775 624 A2 beschreibt einen Vorderradlenkungs-Aktuator für die Lenkung der Vorderräder eines Kraftfahrzeuges, der im Übrigen die Merkmale des Oberbegriffs des Anspruchs 1 besitzt.

Die Anforderungen an den Aktuator einer Hinterradlenkung unterscheiden sich grundlegend von denen an den Aktuator beziehungsweise an die Servovorrichtung einer Vorderradlenkung. Da eine Hinterradlenkung vor allem der Verbesserung der Fahrdynamik dient, ist der Hub nur sehr klein, umso genauer muss aber die Einstellung in diesem kleinen Bereich sein. Die Verstellung erfolgt nur durch den Aktuator, der von einer Fahrdynamikregelung angesteuert wird. Der Fahrer nimmt darauf keinen direkten Einfluss. Wird der Aktuator nicht angesteuert, muss er unverrückbar seine Position beibehalten. Er muss somit selbsthemmend sein.

Aber auch die an jedwede Lenkvorrichtung gestellten Anforderungen müssen in besonders hohem Maße erfüllt sein: Hoher Wirkungsgrad durch kleine Reibungsverluste, kleine Einbaumaße und Widerstandsfähigkeit gegen starke von den Rädern eingeleitete Kräfte, etwa beim Rempeln einer Gehsteigkante.

Aus der US 5,595,089 ist ein Aktuator einer Hinterradlenkung bekannt, bei dem der Rotor des Elektromotors die Spindelmutter über ein zweistufiges Planetengetriebe treibt und das Gewinde einen großen Durchmesser hat. Um bei der großen Fläche der Brustflanken (sie bilden Reibungsflächen) noch einen akzeptablen Wirkungsgrad zu erreichen, ist eine große Steigung erforderlich. Diese wieder erfordert die hohe Übersetzung des Planetengetriebes, um eine hohe Gesamtübersetzung zu erreichen. Das Planetengetriebe aber bringt weitere Reibungsverluste, und macht den Aktuator schwer, teuer und ungenau, weil es eine Reihe von aufeinanderfolgenden Spielen enthält.

Der Wirkungsgrad der Kraftübertragung zwischen Spindelmutter und Gewindespindel hängt vom Steigungswinkel des Gewindes ab: Je größer der Steigungswinkel, desto kleiner die Reibungsfläche und desto günstiger der Wirkungsgrad, bei einer bestimmten Steigung. Dabei ist der Steigungswinkel der Winkel, den die Tangente an die Brustflanke im Mittenzylinder des Gewindes mit einer achsnormalen Ebene einschließt und ist die Steigung die axiale Erstreckung eines Gewindeganges (einer vollen Umdrehung). Um bei gleicher Steigung einen größeren Steigungswinkel zu erreichen, muss der Durchmesser des Mittenzylinders möglichst klein sein. Die Steigung ihrerseits ist möglichst klein zu wählen, um erstens selbsthemmend zu sein und um zweitens eine so hohe Übersetzung zu erreichen, dass kein zusätzliches Getriebe erforderlich ist, auch nicht bei einem aus Raumgründen erwünschten hochtourigen Elektromotor.

Man sieht, es ist ein Problem, die Forderung nach Selbsthemmung, hohem Wirkungsgrad und kleinen Baumaßen unter einen Hut zu bringen. Die Lösung dieses Problems ist das Ziel der vorliegenden Erfindung. Sie besteht in den kennzeichnenden Merkmalen des Anspruchs 1.

Der für den hohen Wirkungsgrad nötige hohe Steigungswinkel und eine geringe Steigung werden dadurch erreicht, dass der Durchmesser des Gewindes (also der Durchmesser der so genannten Gewindespindel) möglichst klein bemessen wird, nämlich kleiner als der Durchmesser der sich an das Gewinde unmittelbar anschließenden Abschnitte der Spindel (Durchmesser der so genannten Spindelteile). Das ist bei entsprechender Werkstoffauswahl möglich, wenn man sich von der Vorstellung löst, dass die Spindel eine einstückige dicke Stange sein muss. Wenn die Spindel aus einer Gewindespindel und beiderseits einem Spindelteil besteht, kann die Gewindespindel (das ist der das Gewinde tragende Teil) mit dem kleinen Durchmesser wegen des geringen Hubbereiches sehr kurz sein. Die beiderseits anschließenden dicken Spindelteile sorgen für die nötige Steifigkeit der Spindel als Ganzes. Zudem ist die dünne Gewindespindel über die im Gehäuse gelagerte Spindelmutter sowieso quer zur Achsrichtung abgestützt. Dazu ist eine gute Schmierung der Gewindegänge vorgesehen. Die gebaute Spindel kann über zwei an den Enden vorgesehene Gleitlager im Gehäuse gelagert sein, wobei die Spindelmutter - wie erwähnt - im Bereich des vergleichsweise dünnen Gewindes als dritte (radiale) Lagerstelle dient.

Somit ergibt sich ein Aktuator, bei dem die Drehbewegung eines Elektromotors direkt - d.h. ohne zusätzliche Getriebestufen - in eine lineare Stellbewegung übersetzt wird, wobei aufgrund eines hohen möglichen Steigungswinkels ein hoher Wirkungsgrad realisiert ist und aufgrund der geringen Steigung die erforderliche Steifigkeit der Spindel gewährleistet ist.

Um einerseits einen großen Durchmesser der an die Gewindespindel anschließenden Spindelteile und andererseits einen diesbezüglich relativ kleinen Durchmesser der Gewindespindel zu realisieren, ist die Spindel mehrstückig ausgebildet, insbesondere mit zwei oder drei axial fest aneinander montierten Stücken, so dass vor der Montage der Spindel eine einteilige Spindelmutter auf die Gewindespindel aufgesetzt werden kann. Der Innendurchmesser der einteiligen Spindelmutter kann somit geringer sein als der Durchmesser der an das Außengewinde der Spindel anschließenden Spindelteile.

Um die Spindelmutter auch am Verkanten zu hindern, ist der Rotor des Elektromotors gemäß einer Ausführungsform als rohrformige Welle ausgebildet ist, an deren einen Seite die Spindelmutter anschließt. Um diesen Versteifungseffekt zu verstärken, ist es von Vorteil, die Spindelmutter mittels eines doppelten Wälzlagers im Gehäuse zu lagern.

In einer vorteilhaften Ausgestaltung durchsetzt der an der Seite des Elektromotors anschließende Spindelteil größeren Durchmessers den rohrförmigen Rotor. Dieser oder der andere Spindelteil hat vorzugsweise eine zentrale Längsbohrung, in die die Gewindespindel fest eingeschraubt ist. So kann die Gewindespindel beim Zusammenbau des Aktuators in die einteilige Spindelmutter eingeschraubt werden. Erst danach wird der Spindelteil größeren Durchmessers fest eingeschraubt. Letzterer kann wenn nötig auch im Inneren des Rotors abgestützt beziehungsweise gegenüber diesem abgedichtet sein.

In einer Weiterbildung hat die Spindelmutter beiderseits einen Kragen erweiterten Innendurchmessers, welcher jeweils gleich dem Aussendurchmesser des jeweiligen Spindelteiles größeren Durchmessers ist, sodass beiderseits des Gewindes der Spindelmutter jeweils eine Kammer veränderlichen Volumens besteht, wobei die Summe der Volumina der beiden Kammern bei rotierender Spindelmutter konstant bleibt. So wird die Fettfüllung im Betrieb zwischen den beiden Kammern hin- und hergequetscht und sorgt so für eine dauerhafte Schmierung der Gewindeteile.

Das Gewinde kann ein gewöhnliches Gewinde mit im Längsschnitt dreieckigen Gewindegängen sein. Eine weitere geringfügige Verbesserung des Wirkungsgrades wird erreicht, wenn das Gewinde ein Trapezgewinde ist. Um einer Beschädigung der Gewindeteile bei sehr hoher Stoßbelastung vorzubeugen, können die Brustflanken des Trapezgewindes gegen den Kopfkreis zu in eine Rundung mit großem Radius übergehen. Damit wird bei Deformation der Gewindespindel auftretende Kantenpressung in den Gewindegängen von Spindelmutter und Gewindespindel verringert.

Im folgenden wird die Erfindung anhand einer beispielsweisen Ausführungsform des erfindungsgemäßen Aktuators beschrieben und erläutert. Es stellen dar:
Fig. 1: Einen Längsschnitt durch den Aktuator,
Fig. 2: Ein Diagramm zur Erläuterung des Steigungswinkels,
Fig. 3: Einen vergrößerten Längsschnitt durch einen Gewindegang.

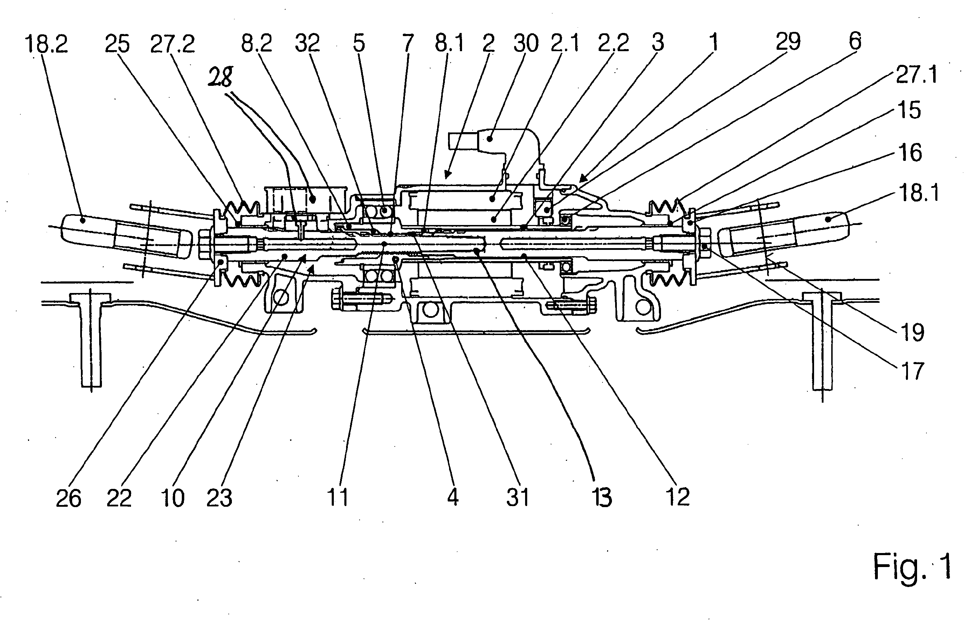

In **Fig.1** ist das Gehäuse insgesamt, ohne Bedachtnahme auf montagebedingte Gehäuseteilungen mit 1 bezeichnet. Es enthält einen Elektromotor 2, dessen Stator 2.1 an der Innenseite des Gehäuses befestigt ist, und dessen Rotor 2.2 auf einer rohrförmigen Welle 3 sitzt. Diese geht auf einer Seite unmittelbar in eine Spindelmutter 4 über, sie ist entweder mit ihr fest verbunden (wie dargestellt) oder einstückig. Die rohrförmige Welle 3 mit der Spindelmutter 4 ist auf der Seite der Spindelmutter 4 in einem ersten Lager 5 und auf der der Spindelmutter 4 abgewandten Seite in einem zweiten Lager 6 im Gehäuse 1 gelagert. Das erste Lager 5 ist zur Aufnahme erheblicher Lagerkräfte besonders stark dimensioniert, hier als Doppelkugellager ausgebildet. Die Spindelmutter 4 hat über einen Teil ihrer axialen Erstreckung ein Gewinde 7 (ein Innengewinde) kleinen Durchmessers und kleiner Steigung, wie weiter unten zu erläutern. An das Gewinde 7 anschließend hat die Gewindemutter 4 in beiden axialen Richtungen Kragen 8.1, 8.2 größeren Durchmessers als der Durchmesser des Gewindes 7.

Die insgesamt mit 10 bezeichnete Spindel besteht aus einer Gewindespindel 11 kleinen Durchmessers, deren Gewinde mit dem Gewinde 7 der Spindelmutter 4 zusammenwirkt, und einem in Fig. 1 rechts daran unmittelbar anschließenden Spindelteil 12 größeren Durchmessers. Mit anderen Worten besitzt der Gewindeabschnitt (Gewindespindel 11) der Spindel 10 einen geringeren Durchmesser - insbesondere einen geringeren Außendurchmesser - als die sich an den Gewindeabschnitt anschließenden Abschnitte der Spindel 10 (Spindelteile 12, 22). Der Spindelteil 12 hat auf der der Gewindespindel 11 zugewandten Seite eine zentrische Längsbohrung 13, in die die Gewindespindel 11 eingesteckt und fest eingeschraubt ist. Der Spindelteil 12 ist an seinem in Fig. 1 rechten Teil in einem Schiebelager 15 mit Verdrehsicherung abgestützt und endet in einem Anschlussstück 16, das mittels eines Bolzens 17 mit ihm fest verbunden ist. An dem Anschlussstück 16 greift, verbunden durch eine Schwenkachse 19, eine zu einem Rad führende Spurstange 18.1 an.

An die in Fig. 1 linke Seite der Gewindespindel 11 schließt ebenfalls unmittelbar ein Spindelteil 22 größeren Durchmessers an. Er ist hier einteilig mit der Gewindespindel 11 ausgeführt. An dem Übergang zwischen dem Spindelteil größeren Durchmessers 22 und der Gewindespindel 11 ist eine Schulter 23. Das von der Spindelmutter 4 abgewandte Ende des Spindelteiles 22 ist wieder in einem Schiebelager 25 mit Verdrehsicherung abgestützt und hat ein Anschlussstück 26 für den Anschluss der anderen Spurstange 18.2, entsprechend der Spurstange 18.1 auf der anderen Seite.

Zwischen dem Gehäuse 1 und den Anschlussstücken 16, 26 ist jeweils ein Faltenbalg 27.1, 27.2 vorgesehen, um Schmutz von den Schiebelagern 15, 25 fernzuhalten. An dem linken Spindelteil größeren Durchmessers 22 ist ein am Gehäuse 1 befestigter linearer Wegsensor 28 vorgesehen, an der der Spindelmutter 4 abgewandten Seite der rohrförmigen Welle 3 ein Impulszähler 29. Diese beiden Sensoren 28, 29 bilden die Rückführsignale für die nicht dargestellte Steuerung des Aktuators. Die Stromzufuhr 30 zum Elektromotor ist nur angedeutet.

Die Spindelmutter 4 besitzt an beiden Enden einen Kragen 8.1, 8.2 erweiterten Innendurchmessers, welcher gleich dem Außendurchmesser des jeweiligen anschließenden Spindelteiles 12, 22 größeren Durchmessers ist. Somit ist beiderseits des Gewindes 7 der Spindelmutter 4 eine jeweilige Kammer 31, 32 veränderlichen Volumens gebildet. Die Summe der Volumina der beiden Kammern 31, 32 bleibt bei axialer Bewegung der Spindel 10 relativ zu der Spindelmutter 4 konstant, so dass die Schmiermittelfüllung im Bereich zwischen den beiden Kammern hin- und hergequetscht wird und somit für eine gute dauerhafte Schmierung der Gewindeteile sorgt.

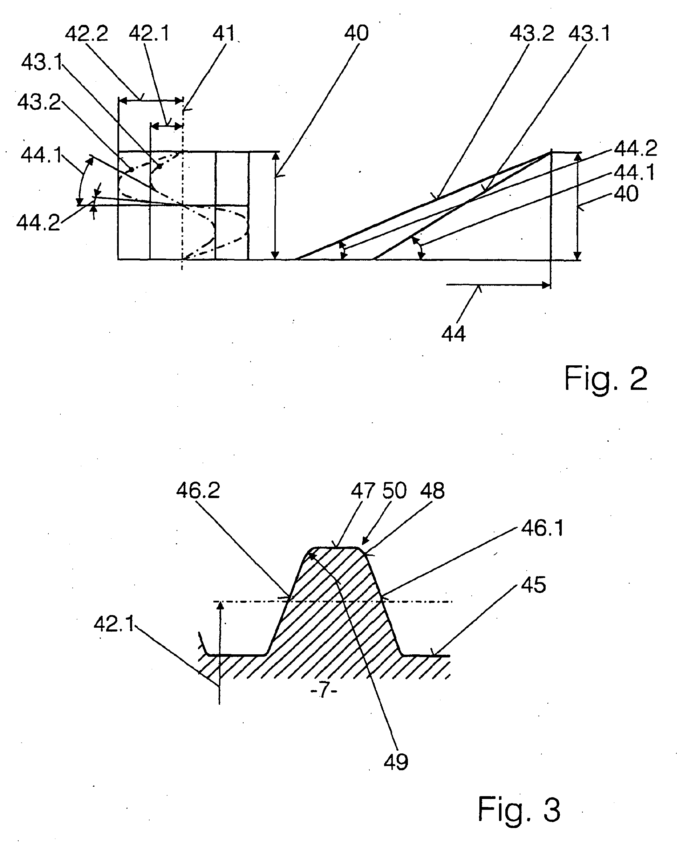

**Fig. 2** zeigt in der linken Bildhälfte eine schematische Ansicht zweier mittlerer Schraubenlinien 43.1,43.2 und in der rechten Bildhälfte deren Abwicklung in einer Ebene. Auf der linken Seite ist die Drehachse der Spindelmutter 4 mit 41 und die Steigung (lineare Verschiebung in einem Gewindegang von 360 Grad) mit 40 bezeichnet. Die Schraubenlinie 43.1 ist einem mittleren Radius 42.1 der einander berührenden Flächen des Gewindes (siehe auch Fig. 3) zugeordnet. Ihr Steigungswinkel 44.1 ist der Winkel, den eine Tangente in einem Punkt mit einer zur Achse 41 normalen Ebene einschließt.

Zum Vergleich ist eine zweite Schraubenlinie 43.2 eingezeichnet, die bei gleicher Steigung 40 einen größeren mittleren Radius 42.2 hat. Bei dieser ist der Steigungswinkel 44.2 erheblich kleiner. Auf der rechten Seite der Fig. 2 erscheinen die abgewickelten Schraubenlinien 43.1, 43.2 als gerade und die Steigungswinkel 44.1, 44.2 sind unter Berücksichtigung der Skalierung der Achse 44 direkt ablesbar. Auf der Achse 44 ist je nach Maßstab der Radius beziehungsweise eine diesem proportionale Größe (der Umfang) aufgetragen. Es ist zu erkennen, dass bei gegebener Steigung 40 ein möglichst großer Steigungswinkel 44.1 hauptsächlich durch Verringerung des mittleren Radius 42.1 des Gewindes 7 erreichbar ist.

Der Längsschnitt durch einen Gewindegang in **Fig. 3** zeigt ein Trapezgewinde, dessen mittlerer Radius 42.1 hier eingetragen ist. Da die Gewinde der Spindelmutter 4 und der Gewindespindel 11 naturgemäß gleich sind, kann es sich hier sowohl um das eine als auch um das andere handeln. Das Trapezgewinde wird von zwei Brustflächen 46.1, 46.2 gebildet, die sich zwischen den Fußflächen 45 und Kopfflächen 47 erstrecken. Am Übergang der Brustflächen 46.1, 46.2 zur Kopffläche 47 ist eine Ausrundung 48 mit großem Radius 49 vorgesehen. Diese Ausrundung 48 schließt stetig an die Brustfläche 46.1 an, bildet an der Kopffläche 47 jedoch eine zurückgesetzte Kante 50.

Insgesamt ist so ein sehr einfach aufgebauter und montierbarer Aktuator mit hoher Übersetzung und optimalem Wirkungsgrad geschaffen.

## Patentansprüche

1. Hinterradlenkungs-Aktuator für die Lenkung der Hinterräder eines Kraftfahrzeuges mittels eines Elektromotors, bestehend aus einem Gehäuse (1), einem Elektromotor (2), dessen Stator (2.1) gehäusefest ist und dessen Rotor (2.2) mit einer im Gehäuse gelagerten und ein Gewinde (7) aufweisenden Spindelmutter (4) antriebsverbunden ist, und aus einer mit der Spindelmutter zusammenwirkenden Spindel (10), welche an entgegengesetzten Seiten aus dem Gehäuse austritt und zur Verbindung mit jeweils einer Spurstange (18.1, 18.2) ausgebildet ist, wobei die Spindel (10) aus einer Gewindespindel (11) und beiderseits einem jeweiligen Spindelteil (12,22) besteht, der jeweils zur Verbindung mit einer Spurstange (18.1, 18.2) ausgebildet ist, und wobei die Gewindespindel (11) einen kleineren Durchmesser besitzt als die beiderseits an die Gewindespindel (11) anschließenden Spindelteile (12,22)
**dadurch gekennzeichnet,**
**dass** die Gewindeflächen der Spindelmutter (4) und der Gewindespindel (11) einander berühren, und
**dass** die Spindel (10) wenigstens zweistückig ausgebildet ist, nämlich bestehend aus dem einen Spindelteil (22) mit Gewindespindel (11) einerseits und dem anderen Spindelteil (12) andererseits, die starr miteinander verbunden sind.

2. Aktuator nach Anspruch 1, **dadurch gekennzeichnet, dass** einer der Spindelteile (12) eine zentrale Längsbohrung (13) hat, in die die Gewindespindel (11) fest eingeschraubt ist.

3. Aktuator nach einem der vorstehenden Ansprüche, **dadurch gekennzeichnet, dass** der Rotor (2.2) des Elektromotors (2) als rohrförmige Welle (3) ausgebildet ist, an deren einen Seite die Spindelmutter (4) anschließt.

4. Aktuator nach Anspruch 3, **dadurch gekennzeichnet, dass** einer der Spindelteile (12) größeren Durchmessers den rohrförmigen Rotor (3) durchsetzt.

5. Aktuator nach einem der vorstehenden Ansprüche, **dadurch gekennzeichnet, dass** die Spindelmutter (4) beiderseits einen Kragen (8.1, 8.2) erweiterten Innendurchmessers hat, welcher jeweils im Wesentlichen gleich dem Aussendurchmesser des jeweiligen Spindelteiles (12,22) größeren Durchmessers ist, sodass beiderseits des Gewindes (7) der Spindelmutter (4) jeweils eine Kammer (31,32) veränderlichen Volumens besteht, wobei die Summe der Volumina der beiden Kammern bei rotierender Spindelmutter (4) konstant bleibt.

6. Aktuator nach einem der vorstehenden Ansprüche, **dadurch gekennzeichnet, dass** das Gewinde (7) ein Trapezgewinde ist.

7. Aktuator nach Anspruch 6, **dadurch gekennzeichnet, dass** die Brustflanken (46.1, 46.2) des Trapezgewindes gegen die Kopffläche (47) zu in eine Rundung (48) übergehen.

8. Aktuator nach Anspruch 7, **dadurch gekennzeichnet, dass** die Rundung (48) stetig an die jeweilige Brustfläche (46.1, 46.2) anschließt und dass die Rundung (48) an der Kopffläche (47) eine Kante (50) bildet.

9. Aktuator nach einem der vorstehenden Ansprüche, **dadurch gekennzeichnet, dass** die Spindelmutter (4) mittels eines doppelten Wälzlagers (5) im Gehäuse (1) gelagert ist.

10. Aktuator nach einem der vorstehenden Ansprüche, **dadurch gekennzeichnet, dass** die Spindel (10) an dem jeweiligen von der Spindelmutter (4) abgewandten Ende der Spindelteile (12, 22) im Gehäuse (1) gelagert ist.

## Claims

1. A rear wheel steering actuator for the steering of the rear wheels of a motor vehicle by means of an electric motor, comprising a housing (1), an electric motor (2) whose stator (2.1) is fixed to the housing and whose rotor (2.2) is connected drive-wise to a spindle nut (4) journalled in the housing and having a thread (7), and comprises a spindle (10) which cooperates with the spindle nut, which protrudes from the housing at opposite sides and which is designed for connection to a respective steering link (18.1, 18.2), wherein the spindle (10) comprises a threaded spindle (11) and respective spindle part (12, 22) at both sides which is designed for connection to a steering link (18.1, 18.2);and wherein the threaded spindle (11) has a smaller diameter than the spindle parts (12, 22) adjoining the threaded spindle (11) at both sides,
**characterised in that,**
the threaded areas of the spindle nut (4) and of the threaded spindle (11) contacting one another; and
**in that** the spindle (10) is designed in at least two parts, namely comprising the one spindle part (22) with threaded spindle (11), on the one hand, and the other spindle part (12), on the other hand, which are rigidly connected to one another.

2. An actuator in accordance with claim 1, **characterised in that** one of the spindle parts (12) has a central longitudinal bore (13) into which the threaded spindle (11) is fixedly screwed.

3. An actuator in accordance with one of the preceding claims, **characterised in that** the rotor (2.2) of the electric motor (2) is designed as a tubular shaft (3) whose one side is adjoined by the spindle nut (4).

4. An actuator in accordance with claim 3, **characterised in that** one of the spindle parts (12) of larger diameter passes through the tubular rotor (3).

5. An actuator in accordance with any one of the preceding claims, **characterised in that** the spindle nut (4) has, at both sides, a collar (8.1, 8.2) of expanded inner diameter which is in each case essentially the same as the outer diameter of the respective spindle part (12, 22) of larger diameter so that a respective chamber (31, 32) of changing volume is present at both sides of the thread (7) of the spindle nut (4), with the sum of the volumes of the two chambers remaining constant with a rotating spindle nut (4).

6. An actuator in accordance with any one of the preceding claims, **characterised in that** the thread (7) is a trapezoidal thread.

7. An actuator in accordance with claim 6, **characterised in that** the breast flanks (46.1, 46.2) of the trapezoidal thread merge into a rounded portion (48) towards the head surface (47).

8. An actuator in accordance with claim 7, **characterised in that** the rounded portion (48) constantly adjoins the respective breast surface (46.1, 46.2); and **in that** the rounded portion (48) forms an edge (50) at the head surface (47).

9. An actuator in accordance with any one of the preceding claims, **characterised in that** the spindle nut (4) is journalled in the housing (1) by means of a double roller bearing.

10. An actuator in accordance with any one of the preceding claims, **characterised in that** the spindle (10) is journalled in the housing (1) at the respective end of the spindle parts (12, 22) remote from the spindle nut (4).

## Revendications

1. Actionneur de direction de roues arrière pour diriger les roues arrière d'un véhicule automobile au moyen d'un moteur électrique, constitué par un boîtier (1), par un moteur électrique (2), dont le stator (2.1) est solidaire du boîtier et dont le rotor (2.2) est relié en termes d'entraînement à un écrou à broche (4) monté dans le boîtier et comportant un taraudage (7), et par une broche (10) coopérant avec l'écrou à broche, laquelle sort du boîtier sur des côtés opposés et est réalisée en vue de la jonction avec une barre d'accouplement respective (18.1, 18.2), dans lequel la broche (10) est formée d'une broche filetée (11) et, sur les deux côtés, d'une partie de broche respective (12, 22) qui est réalisée en vue de la liaison avec une barre d'accouplement respective (18.1, 18.2), et dans lequel la broche filetée (11) possède un diamètre de plus petit que les parties de broche (12, 22) qui se raccordent sur les deux côtés à la broche filetée (11),
**caractérisé en ce que**
les surfaces taraudées/filetées de l'écrou à broche (4) et de la broche filetée (11) se touchent mutuellement, et
**en ce que** la broche (10) est réalisée au moins en deux pièces, c'est-à-dire qu'elle est constituée d'une partie de broche (22) avec la broche filetée (11) d'une part et de l'autre partie de broche (12) d'autre part, qui sont reliées rigidement l'une à l'autre.

2. Actionneur selon la revendication 1, **caractérisé en ce que** l'une des parties de broche (11) comporte un perçage longitudinal central (13) dans lequel la broche filetée (11) est fermement vissée.

3. Actionneur selon l'une des revendications précédentes, **caractérisé en ce que** le rotor (2.2) du moteur électrique (2) est réalisé sous forme d'un arbre tubulaire (3), l'écrou à broche (4) se raccordant à un côté dudit arbre.

4. Actionneur selon la revendication 3, **caractérisé en ce que** l'une des parties de broche (12) de plus grand diamètre traverse le rotor (3) de forme tubulaire.

5. Actionneur selon l'une des revendications précédentes, **caractérisé en ce que** l'écrou à broche (4) possède sur les deux côtés une collerette (8.1, 8.2) de diamètre élargi, qui est respectivement sensiblement égal au diamètre extérieur de la partie de broche respective (12, 22) de plus grand diamètre, de sorte que des deux côtés du taraudage (7) de l'écrou à broche (4) il existe respectivement une chambre (31, 32) de volume variable, telles que la somme des volumes des deux chambres reste constante lorsque l'écrou à broche (4) tourne.

6. Actionneur selon l'une des revendications précédentes, **caractérisé en ce que** le taraudage/filetage (7) est un pas de vis à section trapézoïdale.

7. Actionneur selon la revendication 6, **caractérisé en ce que** les flancs latéraux (46.1, 46.2) du pas de vis trapézoïdal se transforment en un arrondi vers la surface supérieure (47).

8. Actionneur selon la revendication 7, **caractérisé en ce que** l'arrondi (48) se raccorde en continu à la surface latérale respective (46.1, 46.2), et **en ce que** l'arrondi (48) forme une arête (50) au niveau de la surface supérieure (46).

9. Actionneur selon l'une des revendications précédentes, **caractérisé en ce que** l'écrou à broche (4) est monté dans le boîtier (1) au moyen d'un double palier à roulements (5).

10. Actionneur selon l'une des revendications précédentes, **caractérisé en ce que** la broche (10) est montée dans le boîtier (1) à l'extrémité respective, détournée de l'écrou à broche (4), des parties de broche (12, 22).
